# EUROPEAN PATENT APPLICATION

(11) **EP 4 482 109 A1**
(43) Date of publication of application: **25.12.2024**
(21) Application number: 24182483.8
(22) Date of filing: 17.06.2024
(51) Int. Cl.: H04L 45/00, H04L 45/586, H04L 45/28, H04L 41/0668

(54) **DUAL-HOMED PROTECTION METHOD, DEVICE, AND COMPUTER READABLE MEDIUM**

(30) Priority: 19.06.2023 CN 202310730473
(71) Applicant: Nokia Solutions and Networks Oy, 02610 Espoo (FI)
(72) Inventor: MA, Xiao Hua, Shanghai (CN); CHEN, Jin Jiang, Shanghai, 200072 (CN); LIU, Da Lin, Shanghai, 201299 (CN); ZHONG, Ming, Shanghai, 201209 (CN); KE, Yu, Shanghai, 201206 (CN); YANG, Ai Ping, Shanghai, 201208 (CN); TANG, Shi Qing, Shanghai (CN); CHEN, Ying Hui, Shanghai (CN); ZHENG, An Zhen, Shanghai, 201206 (CN); WANG, E, Shanghai, 201206 (CN)
(74) Representative: DREISS Patentanwälte PartG mbB

(57) **Abstract**

Embodiments disclosed herein relate to a dual-homed protection method, a device, and a computer readable medium. The method comprises determining, at a first transport node, a protection state of a first port of the first transport node based on at least one of at least one local request generated by the first transport node or at least one control message from a second transport node, where the first port and a second port of the second transport node are coupled to a customer equipment, a port function of the first port is one of a working port or a protection port, and a port function of the second port is the other of the working port or the protection port. The method further comprises determining, a usage status of the first port with respect to the customer equipment based on the protection state and the port function of the first port, where the usage status includes active or standby. In this way, a dual-homed port protection mechanism is implemented, which does not require customer equipment to support protection protocols, nor does it require protected customer equipment to have two ports.

## Description

### FIELD

Embodiments of the present disclosure generally relate to the field of communications, and more specifically, to a dual-homed protection method, a device, and a computer readable medium.

### BACKGROUND

Optical network architecture-based fronthaul networks are popularized in pace with the development of optical communication technology. The fronthaul networks can implement traffic data transmission between customer equipments (CEs), for example, between a Radio Unit (RU) and a Distributed Unit (DU). In order to improve reliability of data transmission, some service providers use two communication links between the CEs to form an active/standby protection switchover mechanism (also called dual-homed protection).

However, some existing CEs do not support the related protection protocols, and conventional protection switchover mechanisms take a long time to complete the switchover. Therefore, there is a need for further research and development of a protection switchover mechanism with a broader application range and a faster response speed.

### SUMMARY

In general, example embodiments of the present disclosure relate to a fast dual-homed port protection mechanism.

In a first aspect of the present disclosure, there is provided a device, comprising: at least one processor; and at least one memory having instructions stored thereon, the instructions, when executed by the at least one processor, causing the device to: determine, at a first transport node, a protection state of a first port of the first transport node, based on at least one of at least one local request generated by the first transport node or at least one control message from a second transport node, wherein the first port and a second port of the second transport node are coupled to a customer equipment, a port function of the first port is one of a working port or a protection port, and a port function of the second port is the other of the working port or the protection port; and determine, based on the protection state and the port function of the first port, a usage status of the first port with respect to the customer equipment, wherein the usage status includes active or standby.

In a second aspect of the present disclosure, there is provided a method, comprising: determining, at a first transport node, a protection state of a first port of the first transport node, based on at least one of at least one local request generated by the first transport node or at least one control message from a second transport node, wherein the first port and a second port of the second transport node are coupled to a customer equipment, a port function of the first port is one of a working port or a protection port, and a port function of the second port is the other of the working port or the protection port; and determining, based on the protection state and the port function of the first port, a usage status of the first port with respect to the customer equipment, wherein the usage status includes active or standby.

In a third aspect of the present disclosure, there is provided a device, comprising: means for determining, at a first transport node, a protection state of a first port of the first transport node, based on at least one of at least one local request generated by the first transport node or at least one control message from a second transport node, wherein the first port and a second port of the second transport node are coupled to a customer equipment, a port function of the first port is one of a working port or a protection port, and a port function of the second port is the other of the working port or the protection port; and means for determining, based on the protection state and the port function of the first port, a usage status of the first port with respect to the customer equipment, wherein the usage status includes active or standby.

In a fourth aspect of the present disclosure, there is provided a computer readable medium having instructions stored thereon, where the instructions, when executed by a device, cause the device to at least: determine, at a first transport node, a protection state of a first port of the first transport node, based on at least one of at least one local request generated by the first transport node or at least one control message from a second transport node, wherein the first port and a second port of the second transport node are coupled to a customer equipment, a port function of the first port is one of a working port or a protection port, and a port function of the second port is the other of the working port or the protection port; and determine, based on the protection state and the port function of the first port, a usage status of the first port with respect to the customer equipment, wherein the usage status includes active or standby.

In a fifth aspect of the present disclosure, there is provided a computer program having instructions, where the instructions, when executed by a device, cause a device to at least: determine, at a first transport node, a protection state of a first port of the first transport node, based on at least one of at least one local request generated by the first transport node or at least one control message from a second transport node, wherein the first port and a second port of the second transport node are coupled to a customer equipment, a port function of the first port is one of a working port or a protection port, and a port function of the second port is the other of the working port or the protection port; and determine, based on the protection state and the port function of the first port, a usage status of the first port with respect to the customer equipment, wherein the usage status includes active or standby.

In a sixth aspect, there is provided an apparatus, comprising: protection state determining circuitry configured to determine, at a first transport node, a protection state of a first port of the first transport node, based on at least one of at least one local request generated by the first transport node or at least one control message from a second transport node, wherein the first port and a second port of the second transport node are coupled to a customer equipment, a port function of the first port is one of a working port or a protection port, and a port function of the second port is the other of the working port or the protection port; and usage status determining circuitry configured to determine, based on the protection state and the port function of the first port, a usage status of the first port with respect to the customer equipment, where the usage status includes active or standby.

This Summary is provided to introduce a selection of concepts in a simplified form that are further described below in the Detailed Description. This Summary is not intended to identify key features or essential features of the present disclosure, nor is it intended to be used to limit the scope of the present disclosure.

### BRIEF DESCRIPTION OF THE DRAWINGS

Fig. 1 illustrates an example communication system where embodiments of the present disclosure can be implemented.
Fig. 2 illustrates a schematic interaction diagram of a communication method according to some embodiments of the present disclosure.
Fig. 3 illustrates a schematic block diagram of a Dual-Homed Port Protection (DHPP) system according to some embodiments of the present disclosure.
Fig. 4 illustrates an example implementation of a DHPP module according to some embodiments of the present disclosure.
Figs. 5A-5C illustrate an example implementation of a control message for DHPP according to some embodiments of the present disclosure.
Fig. 6 illustrates a schematic diagram of a DHPP system in a normal condition according to some embodiments of the present disclosure.
Fig. 7 illustrates a schematic diagram of a DHPP system having a traffic data link failure according to some embodiments of the present disclosure.
Fig. 8 illustrates a schematic diagram of a DHPP system having an active node failure according to some embodiments of the present disclosure.
Fig. 9 illustrates a schematic diagram of a DPHH system having a standy node failure according to some embodiments of the present disclosure.
Fig. 10 illustrates a schematic diagram of a DPHH system with a DHPP control link failure according to some embodiments of the present disclosure.
Fig. 11 illustrates a schematic diagram of a DHPP system having Mate Fail and a DHPP control link failure according to some embodiments of the present disclosure.
Fig. 12 illustrates a schematic diagram of a DHPP system for a dual port customer equipment according to some embodiments of the present disclosure.
Fig. 13 illustrates a schematic flowchart of a communication method according to some embodiments of the present disclosure.
Fig. 14 illustrates a simplified block diagram of an electronic device adapted to implement embodiments of the present disclosure.
Fig. 15 illustrates a schematic diagram of a computer readable medium adapted to implement embodiments of the present disclosure.

Throughout the drawings, the same or reference symbols refer to the same or similar components.

### DETAILED DESCRIPTION OF EMBODIMENTS

Reference below will be made to some example embodiments illustrated in the drawings to describe the principles and spirits of the present disclosure. It would be appreciated that description of those specific embodiments is provided merely to enable those skilled in the art to better understand and implement the present disclosure and is not intended for limiting the scope disclosed herein in any manner.

As used herein, the term "includes" and its variants are to be read as open-ended terms that mean "includes, but is not limited to." The term "based on" is to be read as "based at least in part on." The term "an embodiment" or "the embodiment" is to be read as "at least one example embodiment." The terms "first," "second," and the like may refer to different or same objects. Other definitions, explicit and implicit, may be included below.

As used herein, the term "determining" encompasses a wide variety of actions. For example, "determining" can include calculating, computing, processing, deriving, investigating, looking up (e.g. looking up in a table, a database or another data structure), ascertaining and the like. Moreover, "determining" may include receiving (e.g., receiving information), accessing (e.g. accessing data in a memory) and the like. Further, "determining" may include resolving, selecting, choosing, establishing, and the like. For "at least one of the following: <a list of two or more elements>," "at least one of <a list of two or more elements>," and the like, as used herein, two or more elements in the list connected by "and" or "or" indicates at least one from those elements, or at least any two or more elements from those elements, or at least all the elements.

The term "circuitry" used herein may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware, and (ii) any portions of hardware processor(s) with software (including digital signal processor(s), software, and memory(ies) that work together to cause a device, such as a mobile phone or server, to perform various functions); and (c) hardware circuit(s) and/or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, the term "circuitry" also covers an implementation of merely a hardware circuit or processor (or multiple processors) or portion of a hardware circuit or processor and its (or their) accompanying software and/or firmware. The term "circuitry" also covers, for example, if applicable to the particular claim element, a baseband integrated circuit or processor integrated circuit or a similar integrated circuit in an exchanger or other computing device.

For the dual-homed topology, the popular protection mechanisms in a packet transport network are Multi-chassis Link Aggregation Group (MC-LAG) and Ethernet Ring Protection (ERP). The drawbacks of the two protection mechanisms are: both MC-LAG and ERP require that customer equipments (CEs) should support the same protection protocol and control switchover on the other end of the link, so that the packet transport systems can coordinate with the CEs to perform protection switchover; and both MC-LAG and ERP require that the customer equipment side have two ports, i.e., one port be an active port, and the other port be a standby port.

More and more service providers are transforming their networks to a cloud-based solution. For example, Open Radio Access Network (Open RAN) and virtualized Radio Access Network (vRAN) are two hottest topics. The Open Access Network is to disaggregate mobile base stations using industry-standardized interfaces (e.g. O-RAN interfaces, enhanced Common Public Radio Interfaces (eCPRIs), Common Public Radio Interfaces (CPRIs), and the like) between a BaseBand Unit (BBU) and a Radio Unit (RU). vRAN is to replace the BBU with software running on general-purpose servers, which offer operators more flexibility and agility in their networks and a potential for choosing software in a wider range from different vendors. vRAN includes devices such as a virtualized Distributed Unit (vDU), a virtualized Central Unit (vCU), and the like, as required in 3GPP and Open RAN standard organizations.

When the network functions are implemented via software on general-purposes servers, the processing efficiency is dependent on performance of processors such as a Central Processing Unit (CPU), a Graphics Processing Unit (GPU), a Data Processing Unit (DPU), and the like. Unlike hardware-based Application Specific Integrated Circuits (ASCICs) or Field Programmable Gate Arrays (FPGAs) that can support processing at a wire speed, the processors have a computing capability greatly impacted by the load, and therefore do not support some network functions to reduce the load.

Some service providers are planning to build the next-generation fronthaul transport networks to carry traffic between the RU and the vDU/vCU, where two fronthaul transport nodes are deployed to provide redundancy in case one node fails. In order to guarantee the performance, it is required to provide a 50ms or shorter fast automatic protection mechanism against node failures and link failures. However, in order to reduce the cost, the RU has only one uplink interface towards the vDU, and the RU/vDU/vCU does not support any existing fast protection protocols such as LAG, MC-LAG, ERP, or ELP (Ethernet Linear Protection). To solve the problem, the existing solutions include: at the RU side, the RU not supporting automatic protection can only be switched manually by operators; at the vDU/vCU side, the MC-LAG mechanism is supported by disabling the Link Aggregation Control Protocol (LACP) protocol, but the performance is not ideal, and the time required for protection switchover is in the order of seconds.

Besides the cloud networks, the traditional non-cloud networks also have some devices that do not support any layer 2 protection mechanism like LAG/MC-LAG/ERP/ELP, and if a traffic hit time less than, for example, 50ms, is required, a fast protection mechanism is also needed.

In view of the above, the embodiments of the present disclosure provide a fast dual-homed port protection mechanism without requiring that CEs to support any protection protocols or to have two ports. The basic concept of the embodiments of the present disclosure is that the fast protection mechanism works between two local packet transport nodes, which exchanges control messages of protection states between two transport nodes and controls two working/protection links connected with the CEs to ensure at one time only one link is "active" to forward traffic data between the CEs. The mechanism can control the switchover based on defects detected locally, without the need to exchange control messages with the CEs. In some implementations, a CE with only one port can use a Y-cable (including a Y-optical cable, and a Y-electrical cable) to form two links (a signal is split from the only port of the customer equipment into two duplicated signals that are respectively copied to two peer packet transport nodes), and CE can be configured to trigger shutdown of the laser of the port connected with the CE, thereby preventing signal duplications caused by the Y-cable.

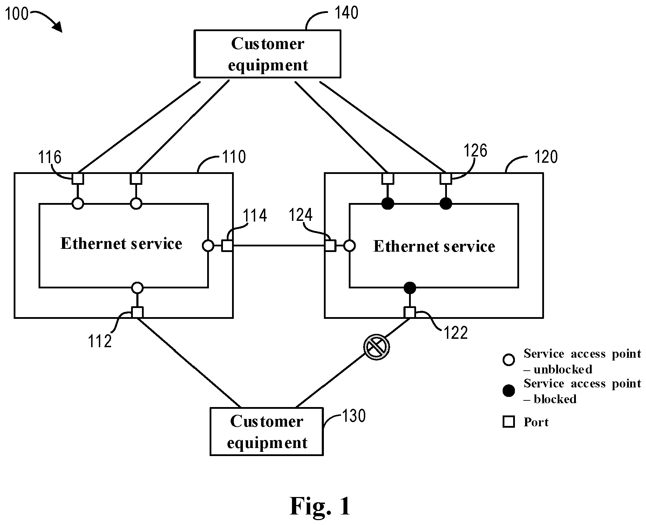

Fig. 1 illustrates an example communication system 100 where embodiments of the present disclosure can be implemented. The communication system 100 may be an optical transmission system or packet transmission system, and may be implemented in a fronthaul network, for example, at the base station of 4G, 5G or other standard. As shown therein, the communication system 100 includes a first transport node 110, a second transport node 120, a customer equipment 130, and a customer equipment 140. The customer equipment 130 may be a Radio Unit (RU), a router, or the like, and the customer equipment 140 may be a Distributed Unit (DU), or a virtualized Distributed Unit (vDU) in the form of software on a general-purpose processor. The first transport node 110 and the second transport node 120 may be a switching device, for example, an Ethernet service switch. The first transport node 110 and the second transport node 120 may include physical or logical ports (112, 122, 114, 124, 116, 126) for communicating with the customer equipment 130 and the customer equipment 140, or communicating with each other. The port can serve any EVC services (e.g. E-Line/E-LAN/E-Tree services).

The customer equipment 130 and the customer equipment 140 can perform bidirectional data transmission via one or more ports in the first transport node 110 and the second transport node 120. For example, the traffic data transmission from the customer equipment 130 to the customer equipment 140 may be referred to as uplink transmission while the traffic data transmission from the customer equipment 140 to the customer equipment 130 may be referred to as downlink transmission. It would be appreciated that the communication system 100 may include a different number of customer equipments 130 and 140 from that shown in Fig. 1, and can simultaneously provide data forwarding services between a plurality of CEs 130 and a plurality of customer equipments 140.

As aforementioned, the communication system 100 is required to support the protection mechanism, to recover user traffic data between the customer equipments 130 and 140, to thus cope with link failures or failures of transport nodes 110 and 120. As shown in Fig. 1, the connected customer equipment 130 can access two redundant transport nodes 110 and 120 in a dual-homing manner. The customer equipment 130 can be connected to the port 112 of the first transport node 110, and connected to the port 122 of the second transport node 120, to form respective links for traffic data transmission. The first transport node 120 includes a port 116 connected to the upstream customer equipment 140. Likewise, the second transport node 120 includes a port 126 connected to the upstream customer equipment 140. The first transport node 110 and the second transport node 120 can be connected to each other via mate ports 114 and 124 to form mate links that can carry traffic data and/or protected control messages. It would be appreciated that the number of ports as shown in Fig. 1 is provided only as an example, which is not limited herein. For example, each of the first transport node 110 and the second transport node 120 may include a plurality of ports for the downstream customer equipment 130 and a plurality of ports for the upstream customer equipment 140, and each transport node may include a plurality of mate ports to form a plurality of mate links.

In order to implement data protection upon occurrence of a failure, the port 112 of the first transport node 110 and the port 122 of the second transport node 120 may form a group of ports, where the port 112 of the first transport node 110 may be set as a working port (for example, having higher performance, and being in service most of the time), and the port 122 of the second transport node 120 is set as a protection port. It would be appreciated that an arrangement in the other way around is also feasible. In some implementations, a node may have a plurality of groups of nodes thereon. A part of the ports of the first transport node 110 are working ports, and the other part of the ports are protection ports. The second transport node 120 has a similar arrangement. During normal operation, only one transport port in a group of ports is active at the same time, and the other transport port is in the standby state. For example, the first port 112 is active, and the second port 122 is standby. In the case, the customer equipment 130 can send/receive traffic data to/from the customer equipment 140 via the port 112 and the port 116 of the first transport node 110, and the corresponding service access point is not blocked; the port 122 of the second transport node 120 is standby, and the customer equipment 130 does not send/receive traffic data to/from the customer equipment 140 via the port 122. When a communication failure (e.g. a transport node failure, or a link failure) occurs between the customer equipment 130 and the customer equipment 140, the standby transport node 120 can take over the traffic data. The node failure may be, for example, a hardware failure at a node level, intentional or unintentional restart and shutdown, or the like. The link failure may occur in a link for carrying traffic data connected with the access device 130, a mate link for carrying traffic data between two transport nodes, a mate link for carrying protected control messages between two transport nodes, or the like. At this time, the customer equipment 130 can be switched to further communicate with the customer equipment 140 via the ports 122 and 126 of the second transmission device (not shown in Fig. 1). It is worth noting that the protection switchover mechanism according to embodiments of the present disclosure cannot only be implemented at the downstream customer equipment 130, but can also be applied to the upstream customer equipment 140, which is not limited herein.

According to the embodiments of the present disclosure, the desired protection switchover can implement at least a part of the following aspects: in the case of a failure of the active node, traffic data of all the ports of the active node should be switched to the standby node; in the case of a failure of the standby node, traffic data of all the ports of the active node should not be impacted, nor would traffic loss occur; in the case of a failure of one port of the active node, traffic data of the port should be switched to a corresponding port of the standby node; in the case of a failure of a port of the standby node, traffic over a corresponding port of the active node should not be impacted, nor would traffic data loss occur; in the case of a mate link failure, traffic data can still be recovered and forwarded.

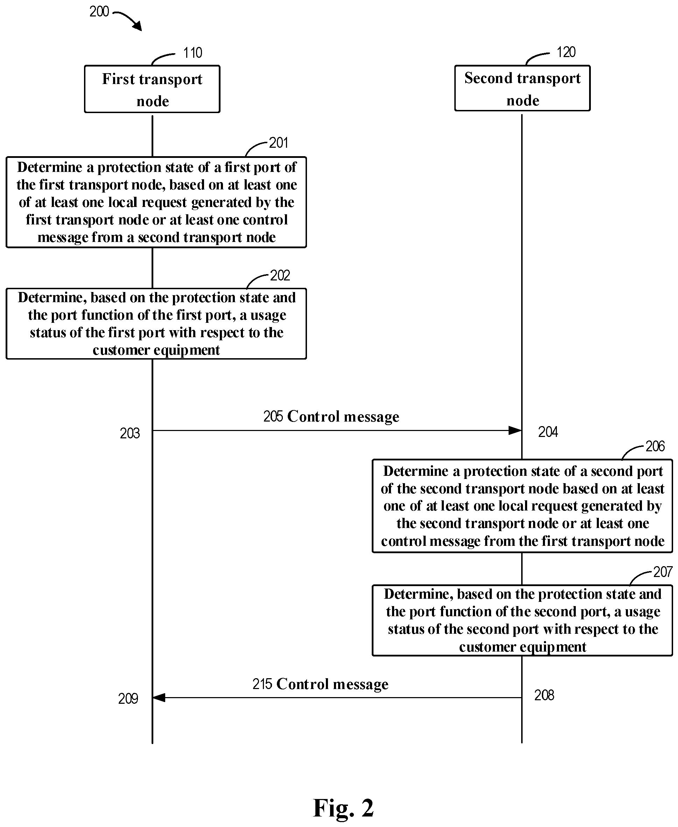

To this end, the embodiments of the present disclosure provide an improved technical solution that can implement port-based fast dual-homed protection based on a local request and a control message between transport nodes. Reference below will be made to Figs. 2-15 to describe in detail the embodiments of the present disclosure.

Fig. 2 illustrates a schematic interaction diagram of a communication method 200 according to some embodiments of the present disclosure. The communication method 200 can be implemented by the first transport node 110 and the second transport node 120 as shown in Fig. 1. In some implementations, the dual-homed protection functions implemented over the first transport node 110 and the second transport node 120 may be equal, i.e., the actions of the first transport node 110 may be implemented by the second transport node 120, and the actions of the second transport node 120 may be implemented by the first transport node 110. Alternatively, the dual-homed protection function may be implemented on one of the first transport node 110 and the second transport node 120, and the other node is only responsible for reporting a failure of the local port and implement a usage status determined by the peer end. For ease of description, reference will be made to Fig. 1 to describe the interaction process 200.

At 201, the first transport node 110 determines the protection state of the first port 112 of the first transport node 110 based on at least one of at least one local request generated by the first transport node 110, or at least one control message from the second transport node 120. The local request may be a request triggered at the first transport node, for example, a detected link or node failure, performance degradation, protection switchover manually triggered by a user, protection switchover initiated by the node *per se,* and the like. In some implementations, the first transport node 110 can periodically obtain a local request, or obtain triggered states of all the local requests at the first transport node 110 in response to an event, for example, a change of any one of the local requests.

The first transport node 110 can also receive a control message from the second transport node 120, for example, via a mate link between mate ports 114 and 124. The mate link for carrying the control message may be a separate link, or may be a shared link for carrying traffic data between the transport nodes 110 and 120. The control message from the second transport node 120 may include a far-end request indicating the protection state of the second port 122 of the second transport node. In some implementations, the first transport node 110 can periodically receive a control message from the second transport node 120, or receive a respective control message if an event occurs at the second transport node 120.

In some embodiments, each protection state in the set of protection states may have an associated priority. The protection state having the highest priority indicated in the local requests and the far-end request is determined as the protection state of the first port. In other words, a request with the highest priority can be found, and the protection state of the first port 112 can be determined based on the request with the highest priority.

At 202, at the first transport node 110, the usage status of the first port 112 with respect to the customer equipment 130 is determined based on the protection state and the port function of the first port 112. The first port 112 of the first transport node 110 and the second port 122 of the second transport node 120 may be coupled to the customer equipment 130 and have corresponding mate port functions, to implement dual-homed protection. As used herein, the port function may also be referred to as port role, and the two terms can be used interchangeably. For example, the port function of the first port 112 may be a working port, and the port function of the second port 122 may be a protection port (as would be appreciated, an arrangement in the other way around is also feasible). In some implementations, the port function or role can be set based on the performance or load of the transport node. During normal operation, the first port is active, and the second port 122 is standby, i.e., the customer equipment 130 transmits and receives traffic data via the first port 112, and the traffic data (if any) at the second port 122 are discarded. After protection switchover (e.g. a failure of the first transport node 110 or the first port 112), the customer equipment 130 may be switched to send and receive traffic data via the second port 122, to implement traffic data protection.

In some embodiments, the protection state may indicate the usage status associated with the port function. The usage status of the port function may be represented through the following configuration: the working port is active while the protection port is standby; the working port is standby while the protection port is active; both the working port and the protection port are active, and the like. Therefore, whether the first port is to be active or standby can be determined based on the determined protection state of the first port and the port function of the first port.

In some embodiments, if the usage status of the first port 112 is determined to be active, a packet from or to the customer equipment 130 is forwarded at the first port 112, and Media Access Control (MAC) address learning can be enabled in the receiving direction. If the usage status of the first port 112 is determined to be active, the packet at the first port 112 is discarded, and MAC address learning in the receiving direction is stopped. In some embodiments, if the usage status is changed, MAC addresses learned on the first port and the mate port 114 connected to the second transport node 120 are flushed. In addition or alternatively, MAC addresses in the entire Filter Database (FDB) of the transport node 110 may be flushed.

In some embodiments, a port of the customer equipment is coupled to the first port 112 and the second port 122 via an optical splitter/combiner (e.g. a Y-cable). If the usage status of the first port 112 is determined to be standby, a transmit laser at the first port 112 may be shut down. If the usage status of the first port 112 is determined to be active, the transmit laser at the first port 112 may be turned on.

At 203, the first transport node 110 sends the control message 205 to the second transport node 120. Correspondingly, the second transport node 120 receives the control message 205 from the first transport node 110. The control message 205 may indicate the protection state, the usage status, and other information of the first port 110. The control message 205 may be periodically sent, or may be sent if the first transport node 110 fails, or the protection state or the usage status of the first port 112 is changed.

At 206, at the second transport node 120, the protection state of the second port 122 of the second transport node 120 is determined based on at least one of the at least one local request generated by the second transport node 120, or at least one control message from the first transport node 110. At 207, the usage status of the second port 122 with respect to the customer equipment 130 is determined based on the protection state and the port function of the second port 122. At 208, the second transport node 120 sends the control message 215 to the first transport node 110. Correspondingly, the first transport node 110 receives the control message 215 from the second transport node 120. In some implementations, the dual-homed functions implemented on the first transport node 110 and the second transport node 120 may be equal, and the actions at the second transport node 120 are similar to the actions 201 through 203 of the first transport node 110, which are omitted here. In some implementations, dual-homed protection function can be implemented only at the first transport node 110; the second transport node 120 only reports the failure of the second port 122, without determining the protection state or the usage status of the local port, and receives and applies the usage status determined by the first transport node 110. In other words, the actions 206 and 207 may be omitted, and the control message 215 is mainly used to indicate failure information of the second port 122. As such, in conjunction with the local request, the first transport node 110 and the second transport node 120 can negotiate the usage statuses of the mate first port and second port by exchanging the control message, to implement fast dual-homed protection for the customer equipment, without requiring that the customer equipment support an additional protection switchover protocol.

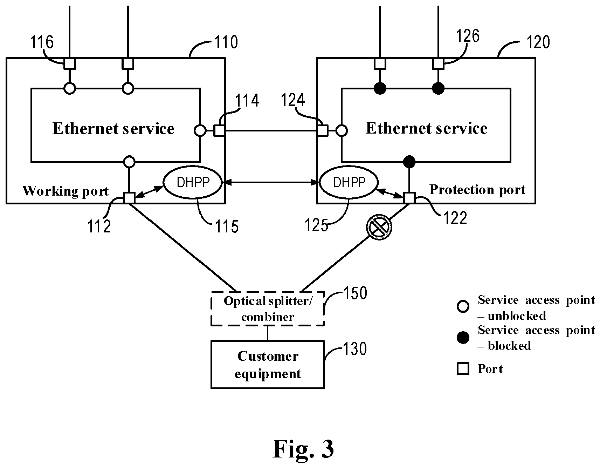

Fig. 3 illustrates a schematic block diagram of a Dual-Homed Port Protection (DHPP) system according to some embodiments of the present disclosure. The DHPP mechanism may be an example implementation for implementing the interaction process 200 as shown in Fig. 2. In some implementations, the customer equipment 130 has only one port, and the only one port can be expanded into two ports using an optical splitter/combiner 150, where one port is coupled to the first port 112, and the other port is coupled to the second port 122. If the customer equipment 130 has two ports, the two ports can be directly coupled to the first port 112 and the second port 122.

The first transport node 110 and the second transport node 120 can work at Layer 2, which may also be called switch nodes. As shown in Fig. 3, in the case that the customer equipment 130 is connected to two redundant transport nodes 110 and 120 in a dual-homing manner, DHPP processes or modules 115 and 125 (two DHPP modules may also be collectively referred to as DHPP group) can run respectively in the two transport nodes to implement the interaction process 200 shown in Fig. 2. Specifically, the DHPP group is distributed in the two redundant transport nodes 110 and 120, where the first transport node 110 includes a DHPP module 115, and the second transport node 120 includes a DHPP module 125.

The DHPP modules 115 and 125 may have the same function. The mate DHPP modules 115 and 125 can coordinate to manipulate a pair of ports 112 and 122, where one of the ports 112 and 122 is in the usage status of "active," and the other port is in the state of "standby," to protect traffic data transmission between the transport node and the customer equipment in case a failure occurs in the communication system, and result in a shorter traffic hit time. For coordination, the mate DHPP modules 115 and 125 can exchange the control message to synchronize information on protection states, switchover commands, active/standby status, and Filter DataBase (FDB) flush. It is worth noting that the first transport node 110 and the second transport node 120 may be included in the same device or different devices, and the mate first port 112 and second port 112 can be controlled by a single DHPP module.

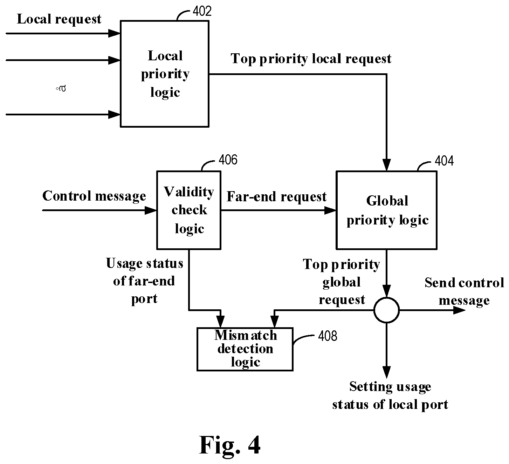

Fig. 4 illustrates an example implementation of a DHPP module according to some embodiments of the present disclosure. The DHPP module may have a protection state switching function. With the function, the DHPP module can determine a protection state and a usage status of the port based on a local request and a control message from a further transport node.

In some embodiments, the protection state of the port may be one of a set of protection states. Each protection state may have an associated priority. In some embodiments, the set of protection states may include at least one of the following: Lockout On Working (LO-W), Lockout On Protection (LO-P), Mate Fail (MF), Forced Switch on Working (FS-W), Forced Switch on Working (FS-W), Forced Switch on Protection (FS-P), Signal Fail on Working (SF-W), Signal Fail on Protection (SF-P), Signal Degrade on Working (SD-W), Signal Degrade on Protection (SD-P), Manual Switch on Working (MS-W), Manual Switch on Protection (MS-P), No Request on Working (NR-W), or No Request on Protection (NR-P). Here, the mate link failure refers to a mate port failure for carrying traffic data, or a control link failure on DHPP. The mate port for carrying traffic data and the port for carrying the DHPP control link may be the same, or may be different. It would be appreciated that, depending on the implementation, more protection states may be covered, for example, Wait To Restore (WTR), Exercise (EXER), Reverse Request (RR), Do Not Revert (DNR), and the like.

The protection states as mentioned above may have the following priorities from high to low: lockout (LO-W/LO-P) > Mate Fail (MF) > Forced Switch (FS-W/FS-P) > link failure (SF-W/SF-P) > link degradation (SD-W/SD-F) > manual switchover (MS-W/MS-P) > No Request on Working (NR-W) > No Request on Protection (NR-P). Alternatively, the protection states may have the following priorities from low to high: lockout (LO-W/LO-P) > Forced Switch (FS-W/FS-P) > Mate Fail (MF) > link failure (SF-W/SF-P) > link degradation (SD-W/SD-F) > manual switchover (MS-W/MS-P) > No Request on Working (NR-W) > No Request on Protection (NR-P).

The DHPP module can implement a protection state transition based on the above priorities. As shown in Fig. 4, the DHHP module includes a local priority logic 402, a global priority logic 404, a validity check logic 406, a mismatch detection logic 408, and the like. The local priority logic 402 is configured to receive local requests, and output a local request with top priority. The validity check logic 406 is configured to receive a control message from a far-end transport node, and output a far-end request after checking. Assumed that the DHPP module is the DHPP module 115, it receives the control message of the second transport node 120, and the far-end request indicates the protection state of the second port 122. The global priority logic 404 is configured to determine a top-priority global request from the far-end request and the local request with top priority. Then, the DHPP module may determine the protection state of the port based on the top-priority global request and the previous protection state of the port, and determine the usage status of the local port based on the determined protection state.

In some embodiments, if commands/conditions with the same priority are executed simultaneously over the two transport nodes (i.e., the local request and the far-end request have the same priority), a command/condition for activating the working port takes priority over a command/condition for activating the protection port. In other words, if the local port of the DHPP module is a working port, the DHPP module determines the usage status of the port as active; and if the local port is a standby port, the DHPP module determines the usage status of the port as standby.

In some embodiments, the protection state of the port can be determined based on one or more state transition tables. The state transition tables may be set based on a protection switchover mode, for example, revertive switchover and non-revertive switchover. The revertive switchover refers to a mode of switching the traffic data back to the working node or the working port after the failure of the working node or working port is resolved; the non-revertive switchover refers to a mode of continuing to transmit traffic data over the protection node or protection mode, rather than switching back to the working node or working port, after the failure of the working node or working port is resolved. In some embodiments, the state transition table may vary depending on whether the highest priority global request is a local request or a far-end request. It would be appreciated that, in the state transition table, if the priority of the previous protection state is higher than the priority of the protection state indicated by the highest-priority global request, transition may not be performed for the protection state.

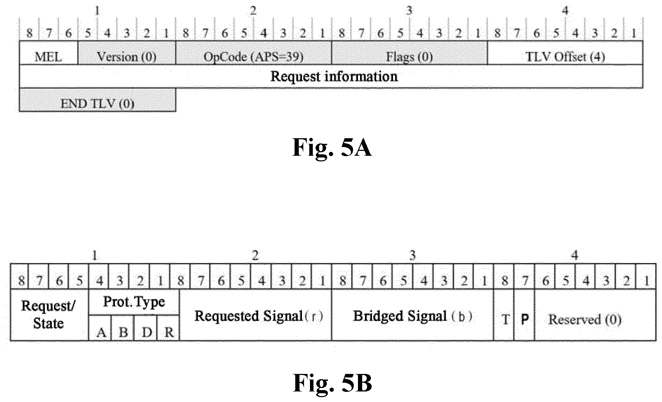

In some embodiments, in some implementations, the DHPP module may also use the mismatch detection logic 408 to detect whether the usage status of the distal port matches the usage status of the port determined locally. If not match, error information may be generated to indicate that protection switchover has not been completed. Figs. 5A-5C illustrates an example implementation of a control message for DHPP according to some embodiments of the present disclosure. Fig. 5A illustrates a control message based on a Protocol Data Unit (PDU) forma, where 4 bytes are used to carry request information from, or to be sent to, a far end. In some embodiments, other fields may be defined as follows: Version: 0x00, Opcode: 0d39 (=0x27), Flags: 0x00, and End TLV: 0x00. In the MEL filed, the Maintenance Entity Group (MEG) level of the PDU is inserted.

Fig. 5B illustrates an example format of the request information in Fig. 5A. The request information includes request/state, protocol type, requested signal (r), bridged information (b), bridge type (T), setting (P) of Mate Fail, and reserved bytes.

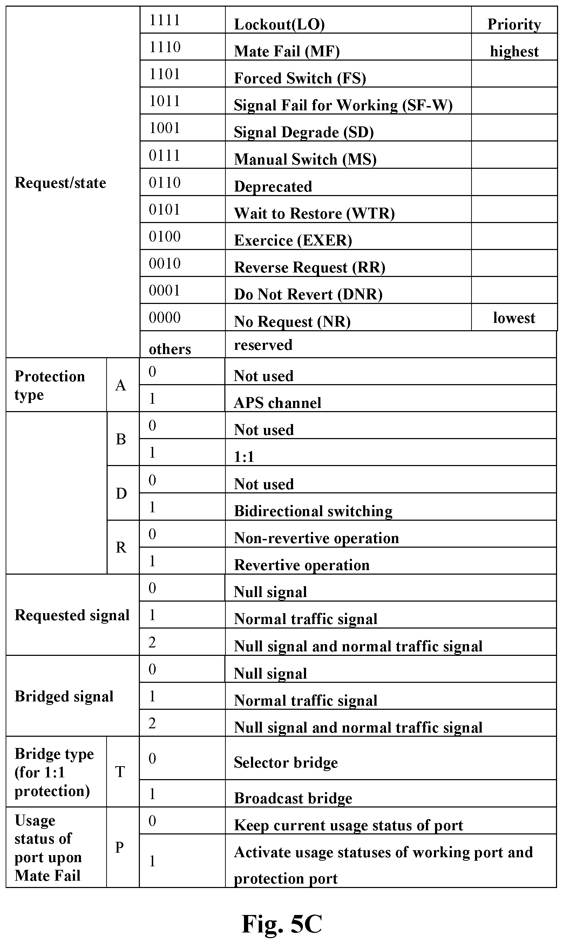

Fig. 5C illustrates the fields in Fig. 5B and meanings thereof. It is worth noting that there is a Mate Fail (MF) condition, and a single byte P is used to indicate two options upon occurrence of the Mate Fail. In Option 1 (e.g. P is 0), the current active (unblocked) status and the current standby (blocked) status of the ports in the DHPP group; and in Option 2 (e.g. P is 1), the two ports in the DHPP group are both in the active (unblocked) status. Option 1 is mainly used in the case that two ports of the DHPP group are connected to the customer equipment CE via an optical splitter/combiner (e.g. a Y-cable). Option 2 is mainly used in the case where the two ports of the DHPP group are connected to the two ports of the customer equipment CE. In some embodiments, if the request with the highest priority indicates Mate Fail (MF), the usage statuses of the ports of the DHPP group can be determined based on the P byte in the control message. If the option is 0, the usage statuses of the two ports may be kept unchanged, and if the option is 1, it is determined that the usage statuses of the two ports are both active.

The control message may indicate the protection state of the port (e.g., the field of "request/state," or the like in Fig. 5C). In some embodiments, the control message may also indicate the usage status of the port (e.g. the fields of "requested signal" and "bridged signal" in Fig. 5C for downlink and uplink communication). In some embodiments, the control message may further indicate Filter DataBase (FDB) flush in case of a node failure, where the FDB is stored at a Medium Access Control (MAC) address learned in the transport node. In some embodiments, the FDB flush may be performed if a usage status of a port is changed (i.e., from active to standby, or from standby to active), or a node failure occurs. The FDB flush may include flushing an MAC address learned on a related port, or may include flushing a FDB of an entire transport node.

The embodiments of the present disclosure further provide protection for a mate link. In some embodiments, the mate link between transport nodes may include a plurality of mate links, and the control message and copies thereof can be transmitted respectively over a first link and a second link in the plurality of mate links. For example, at the transmission side, the control message may be broadcast over two links, where one copy is broadcast over each link; at the reception side, the control message may be received over two mate links, and one copy is selected therefrom to validate whether the mate links operate normally, and sent to the DHPP module after validation.

The failure used herein may include a traffic data link failure, a transport node failure, or Mate Fail between transport nodes. A port failure may be considered as traffic data link failure, corresponding to the protection state of Signal Fail on Working (SF-W) or Signal Fail on Protection (SF-P). In some embodiments, detection of the traffic data link failure may cover physical layer failure detection, including local fault (e.g. Loss of Power, Loss of Signal, Loss of sync, and Local Fault Indication) and remote fault (remote failure indication). In addition or alternatively, detection of the traffic data link failure may further include, for example, IEE 802.3ah Operation, Administration and Management (OAM) link monitoring and remote failure indication. In addition or alternatively, detection of the traffic data link failure may include IEE 802.1ag Configuration Connection Failure Management (CFM) OAM Loss of Continuity (LOC) and Remote Defect Indication (RDI).

For the transport node failure detection, when a transport node is cold reboot or powered off by accident, the transport node may send a set of fast control messages (e.g. a plurality of control messages indicating Signal Fail (SF)) to a peer transport node in a short time using a large capacitor or backup power source. In some embodiments, after the node failure is recovered, the transmit laser at the port of the failed transport node may be disabled until the usage status of the port is determined by the DHHP module.

For the Mate Fail detection, the transport node may determine occurrence of Mate Fail based on the failure of the mate port carrying the control messages, or consecutive loss of a plurality of (e.g. 3) periodic control messages.

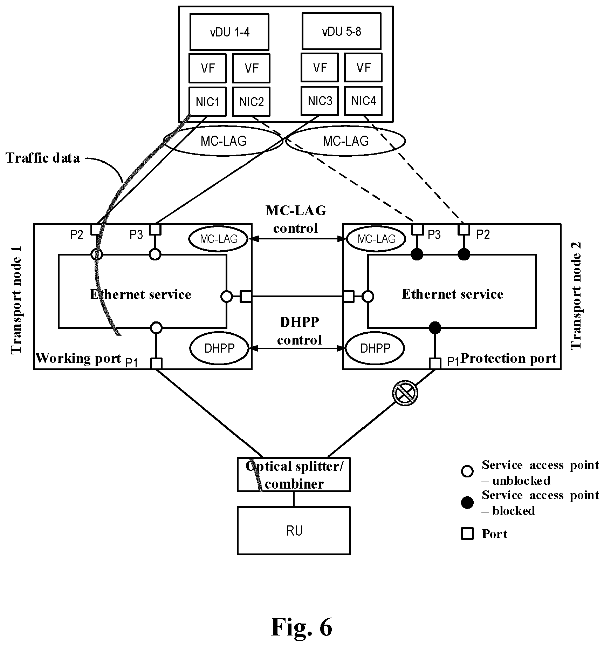

Hereinafter, reference will be made to Figs. 6-12 to describe examples of working processes using a dual-homed communication system according to embodiments of the present disclosure. The examples involve an application of the embodiments of the present disclosure to protect traffic data between a Radio Unit (RU) and a virtualized Distributed Unit (vDU); however, it would be appreciated that the present disclosure is not limited to this.

As shown therein, the customer equipment uses only one port and is connected to two redundant transport nodes via an optical splitter/combiner. A DHPP protection mechanism running on the transport node 1 and the transport node 2 is to protect the RU and the traffic between the transport nodes 1 and 2. In order to restore the end-to-end traffic between the RU and the vDU, a MC-LAG is used on the transport nodes 1 and 2 to protect the traffic data between the vDU and the transport nodes 1 and 2. It would be appreciated that the MC-LAG is provided as an example, not a part of the DHPP protection mechanism, and other protection mechanism may also be employed.

In the example, the RU uses the only one uplink port to connect a Y-cable (including a Y-optical cable, or a Y-electrical cable) which in turn splits an optical signal into two copies each towards a redundant transport node. The vDU uses two ports, where one is connected to the transport node 1, and the other is connected to the transport node 2. A mate link is connected between the transport node 1 and the transport node 2, to provide a forwarding path in case of a link failure. In the transport nodes 1 and 2, the Ethernet service (e.g., E-LAN service) is configured to provide layer 2 forwarding among P1, P2, P3, and P4. In the transport nodes 1 and 2, the DHPP manipulates the P1, the MC-LAG 1 manipulates the P2, and the MC-LAG 2 manipulates the P3.

A DHPP instance runs on the transport node 1, and a peer DHPP instance runs on the transport node 2. Here, the DHPP instance on the transport node 1 manipulates the P1 on the transport node 1, where the port is configured as working port. The DHPP instance on the second transport node 2 manipulates the P1 on the transport node 2, where the port is configured as protection port. The DHPP control message is transmitted and received over the mate link between the transport nodes, which may share the same link as the traffic data, like the P4, or may use other links.

Fig. 6 illustrates a schematic diagram of a DHPP system in a normal condition according to some embodiments of the present disclosure. In the normal condition without any failure or external command, as the priority list defines No Request on Working (NR-W) > No Request on Protection (NR-P), in the initial state, the working port is active and forwarding traffic data, and the protection port is standby and blocked by shutting down the transmit laser. Therefore, the traffic from the RU and the vDU goes through the P1 and P2 of the transport node 1. The traffic data may be bidirectional, and may be broadcast before the MAC address is learned.

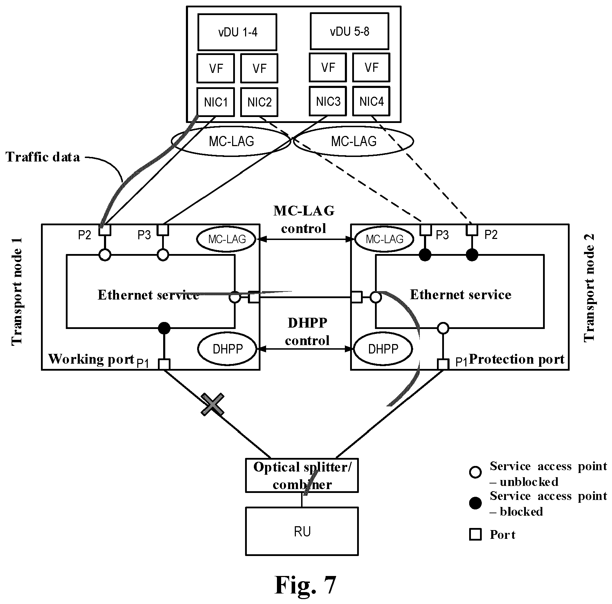

Fig 7 illustrates a schematic diagram of a DHPP system having a traffic data link failure according to some embodiments of the present disclosure. In the case of a link failure (e.g., P1 of the transport node 1 detects local or remote fault), the DHPPs on the transport nodes 1 and 2 perform the following operation.

The DHPP on the transport node 1 transits its own protection state to Signal Fail on Working (SF-W), and sets the working port to the standby status and blocked by shutting down the transmit laser. The DHPP on the transport node 1 may also flush the MAC addresses on the working port and the mate port, and sends SF-W by means of the control message to the peer DHPP on the transport node 2.

Upon reception of SF-W, the DHPP on the transport node 2 transits the state to "SF-W, Remote," sets the protection port to the active status and is unblocked, and flushes the peer port and the P1 by turning on the transmit laser. The DHPP on the transport 2 also sends No Request on Protection (NR-P) to the peer DHPP on the transport node 1.

The traffic data received by the P2 on the transport node 1 from the vDU are broadcast to all ports (except the P2) and forwarded through the P4, and when the traffic data are received by the P4 on the transport node 2, the traffic data are broadcast to the P1 as the MAC table is already flushed or refreshed. Accordingly, the traffic from the vDU to the RU is recovered. The traffic data received by the P1 of the transport node 2 from the RU are broadcast to all ports (except the P1) and forwarded through the P4. Since the MAC address is already learned on the P2, it will be forwarded to the P2 of the transport node 1. In this way, the traffic from the RU to the vDU is recovered. Until then, the bidirectional communication between the RU and the vDU is recovered.

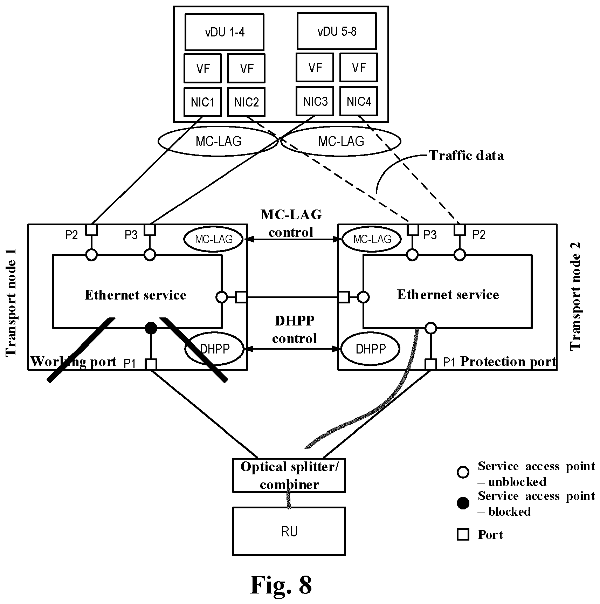

Fig. 8 illustrates a schematic diagram of a DHPP system having an active node failure according to some embodiments of the present disclosure. In the case of an active node failure (for example, a hardware failure, or power-off occurring on the transport node 1), the DHPPs on the transport nodes 1 and 2 perform the following operations.

The DHPP on the transport node 1 sends out 3 fast node failure notification control messages (e.g. SF-W) to notify the peer DHPP on the transport node 2. Upon reception of the node failure notification control messages, the DHPP on the transport node 2 transits the state to "SF-W, Remote," sets the protection port to the active status and is unblocked by turning on the transmit laser, and sends NR-P by means of the control messages to the peer DHPP on the transport node 1. Upon detection of the peer node failure, the MC-LAG on the transport node 2 to active, and flushes the MAC address learned on the P2/P3.

The traffic data of the RU received from the P1 of the transport node 2 are flooded to all the ports (except the P1) and forwarded by the P2/P3. As the vDU is able to receive the traffic data from two Network Interface Cards (NICs), the traffic data from the RU to the vDU are recovered through the P1 and the P2/P3. Upon reception of the MAC address of the RU on the P1, the vDU learns the MAC address of the RU on the NIC2, and starts to send the traffic data via the NIC2. The traffic data received by the P2 of the transport node 2 from the vDU are forwarded to the P1 based on the learned MAC address. In this way, the traffic from the vDU to the RU is recovered. Until then, the bidirectional communication between the RU the vDU is recovered.

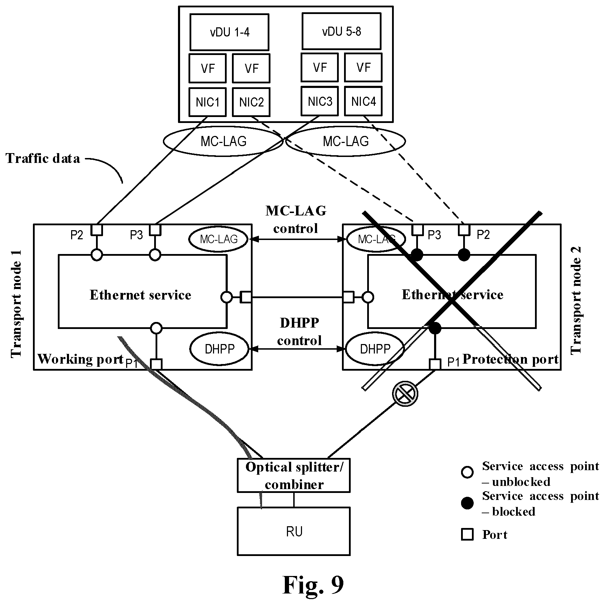

Fig. 9 illustrates a schematic diagram of a DHPP system having a standby node failure according to some embodiments of the present disclosure. In the case of a standby node failure (for example, a hardware failure, or power-off, occurring on the transport node 2), the DHPPs on the transport nodes 1 and 2 perform the following operations.

The DHPP on the transport node 2 sends out 3 fast node failure notification control messages (SF-P) to notify the peer DHPP on the transport node 1. Upon reception of the node failure notification control messages, if no higher priority conditions or commands exist, the DHPP on the transport node transits the state to "SF-P, Remote," keeps the working port to be active and is unblocked with the transmit laser being on, performs no flush on the MAC table, and sends "NR-W" to the peer DHPP on the transport node 2. Therefore, no traffic data are lost in both directions.

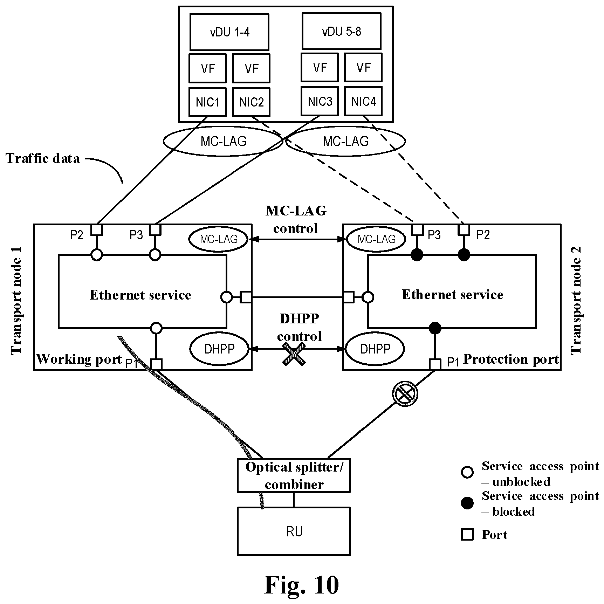

Fig. 10 illustrates a schematic diagram of a DHPP system having a DHPP control link failure according to some embodiments of the present disclosure. In the example of Fig. 10, a DHPP control channel uses a different link than the user traffic. Upon detection of a DHPP control link failure (e.g. link down or loss of control messages), the DHPPs on the transport nodes 1 and 2 perform the following operations.

Upon detection of a DHPP control link failure, if no higher priority conditions such as LO-W/LO-P commands exist, the DHPP on the transport node 1 transits the state to Mate Fail (MF). If processing is performed using the Option 1 mentioned above (considering the customer equipment has only one port), the working port is kept to be active and unblocked, and no flush is performed on the MAC table. Upon detection of the DHPP control link failure, if no higher priority conditions such as LO-W/LO-P commands exist, the DHPP on the transport node 2 transits the state to Mate Fail (MF), and if processing is performed using the Option 1, the port is kept to be standby and unblocked, and no flush is performed on the MAC table. Therefore, no traffic data are lost in both directions.

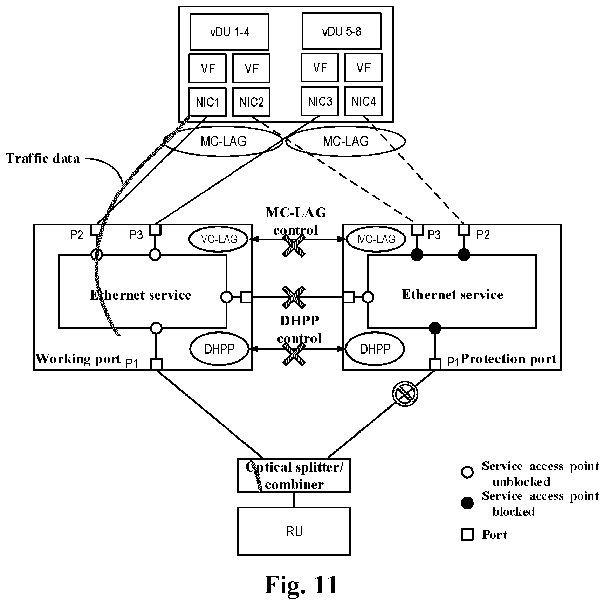

Fig. 11 illustrates a schematic diagram of a DHPP system having Mate Fail and a DHPP control link failure according to some embodiments of the present disclosure. In a case that the DHPP control channel shares the same mate link with the user traffic data, upon detection of Mate Fail (e.g. in the downlink direction), the DHPPs on the transport 1 and 2 perform the following operations.

Upon detection of Mate Fail, if no higher priority conditions such as LO-W/LO-P commands exist, the DHPP on the transport node 1 transits the protection state of the port to Mate Fail (MF), keeps the working port to be active and unblocked, and performs no flush on the MAC table. Upon detection of Mate Fail, if no higher priority conditions such as LO-W/LOP exist, the DHPP on the transport node 2 keeps the protection port to be standby and unblocked, and performs no flush on the MAC table. On the other side, upon detection of Mate Fail, the MC-LAG activates the two peer LAGs. In this way, the bidirectional traffic is recovered.

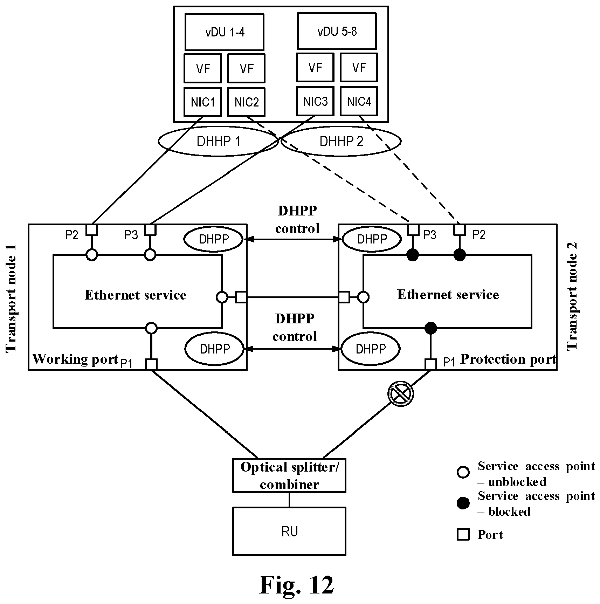

The working process for a single-port customer equipment has been described above with Figs. 6-11. Fig. 12 illustrates a schematic diagram of a DHPP system for a dual-port customer equipment according to some embodiments of the present disclosure. The DHPP protection mechanism running on the transport node 1 and the transport node 2 may also be used to protect the traffic data between the transport nodes 1 and 2 and the vDU, replacing the MC-LAG in Figs 6-11.

As shown therein, the communication between the RU and the transport nodes, and the communication between the vDU and the transport nodes are both protected by the DHPP mechanism. In the communication between the transport nodes and the vDU, the vDU uses two ports, where one port is connected to the transport node 1, and the other port is connected to the transport node 2. For different failures discussed with reference to Figs. 6-11, the DHPPs may follow the same procedures to restore the traffic, except the following difference: the DHPPs of the transport nodes 1 and 2 can both be configured with the option of not shutting down the transmit laser of the standby port since both NICs of the vDU expect to receive the user traffic. The DHPPs can also be configured to shut down a transmit laser of the standby port. The two manners can be configured flexibly. There is a further difference that the DHPPs of the transport nodes 1 and 2 may be configured with an option of transiting both peer ports to be active when Mate Fail occurs, so that the traffic data can still be forwarded via either port.

Table 1 below shows comparison of the DHPP system according to the embodiments of the present disclosure with other existing protection mechanism (i.e., Ethernet Linear Protection (ELP), Ethernet Ring protection (EPR), and MC-LAG).

**Table 1**

| | **ELP** | **ERP** | **MC-LAG** | **DHPP** |
|---|---|---|---|---|
| CE has only one port and uses a Y-cable to connect to ports of redundant transport nodes | No | No | No | Yes |
| CE uses two ports to connect respectively to two ports of redundant transport nodes | Yes (with ELP protocol) | Yes (with ERP protocol) | Yes (with LACP protocol) | Yes (no protocol needed) |
| Protection against note failure and link failure | Yes | Yes | Yes | Yes |
| Require CE supporting protection protocols | Yes | Yes | Yes | No |
| Protection switchover time | < 50 ms | < 50 ms | > 300 ms, or even seconds | < 50 ms |
| External switchover commands (e.g. LO, FS, MS, and the like) can be set on either redundant node | Only on the node with ELP protocol enabled | On either node | On either node | On either node |
| External switchover commands and failure conditions can coexist and take action based on priority | Yes | Yes | No | Yes |
| Mate fail based on priority | No | No | No | Yes. When Mate fail occurs the state machine still works for transition and mate fail can coexist with other switch commands and conditions. This makes the recovery very fast. |
| Shutting down transmit laser of standby port | No | No | No | Configurable |
| When mate control fails, both peers are active, or one is active and the other is standby | Working one is standby, and the protection one is active | Two peers are active | Two peers are active | Configurable to be active or keep the current state |
| Flush MAC addresses on DHPP port and mate port | Not available | Yes | Yes | Yes |

In some example, the protection switchover mechanism according to the embodiments of the present disclosure may be implemented in two steps. In the first step, the mechanism is implemented only in one node, and the other node is responsible for reporting failures on its side and executing a port usage status determined by the peer port, but in this step, the mate link must use a protection mechanism to prevent mate failures. In the second step, the proposed protection switchover mechanism is implemented in both nodes. The method proposed herein can be used to control mate single ports, but it is not limited to this, which may be used to protect paired groups of ports, or protect a pair of Service Access Points (SAPs) where the SAP may be identified as Port ID+VLAN ID, or protect paired groups of SAPs.

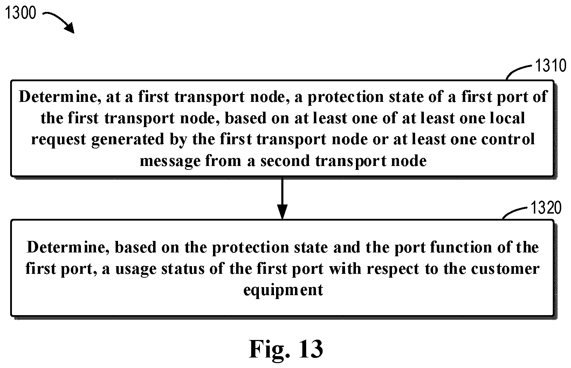

Fig. 13 illustrates a schematic flowchart of a communication method 1300 according to some embodiments of the present disclosure. In some embodiments, the method 1300 may be implemented at either or both of the devices at the first transport node 110 and the second transport node 120 in Fig. 1.

At block 1310, the method comprises determining, at a first transport node, a protection state of a first port of the first transport node based on at least one of at least one local request generated by the first transport node or at least one control message from a second transport node, where the first port and a second port of the second transport node are coupled to a customer equipment, a port function of the first port is one of a working port or a protection port, and a port function of the second port is the other of the working port or the protection port. At block 1320, the method comprises determining a usage status of the first port with respect to the customer equipment based on the protection state and the port function of the first port, where the usage status includes active or standby.

In some embodiments, each of the at least one local request indicates a protection state, among a set of protection states that have respective associated priorities, and a control message of the at least one control message includes a far-end request indicating a protection state of the second port among the set of protection states. The device may determine the protection state of the first port by: determining, from the at least one local request and the far-end request, a request with a highest priority; and determining the protection state of the first port based on a previous protection state of the first port and the request with the highest priority.

In some embodiments, the set of protection states comprises at least one of the following: Lockout on Working; Lockout on Protection; Mate Fail; Forced Switch on Working; Forced Switch on Protection; Signal Fail on Working; Signal Fail on Protection; Signal Degrade on Working; Signal Degrade on Protection; Manual Switch on Working; Manual Switch on Protection; No Request on Working; or No Request on Protection.

In some embodiments, the priorities of the set of protection states at least meet one of the following: priorities of the Lockout on Working and the Lockout on Protection are higher than a priority of the Mate Fail, and the priority of the Mate Fail is higher than priorities of the Forced Switch on Working and the Forced Switch on Protection; or the priorities of the Lockout on Working and the Lockout on Protection are higher than the priorities of the Forced Switch on Working and the Forced Switch on Protection, and the priorities of the Forced Switch on Working and the Forced Switch on Protection are higher than the priority of the Mate Fail.

In some embodiments, the device may determine the request with the highest priority by: determining, based on the priorities, a local request with a highest priority among the at least one local request; and determining the request with the highest priority among the determined local request and the far-end request.

In some embodiments, determining the protection state of the first port comprises: in a case that the local request and the far-end request have a same priority, determining, based on the port function of the first port being the working port, that the usage status of the first port is the active; or determining, based on the function of the first port being the protection port, that the usage status of the first port is standby.

In some embodiments, the device is further configured to: send, based on the protection state of the first port, a control message to the second transport node, such that a usage status of the second port is determined at least based on the control message.

In some embodiments, the first transport node and the second transport node are coupled via at least one mate link, and the control message is transmitted over one of the at least one mate link.

In some embodiments, the device is further configured to: in a case that the request with the highest priority indicates the at least one mate link fails, determine the usage status of the first port and the usage status of the second port based on the indication of the control message.

In some embodiments, determining the usage status of the first port and the usage status of the second port comprises at least one of the following: maintaining the usage status of the first port and the usage status of the second port unchanged; or determining the usage status of the first port and the usage status of the second port are both active.

In some embodiments, the at least one mate link comprises a plurality of mate links, and the control message and a copy thereof are transmitted respectively over a first link and a second link in the plurality of mate links.

In some embodiments, the control message indicates at least one of the following: a protection state of a port; a usage status of a port; or Filter Database (FDB) flush.

In some embodiments, the control message is transmitted via at least one of the following: an Ethernet header; an Internet Protocol (IP) header; a Multiprotocol Label Switching (MPLS) header; or an Optical Transport Network (OTN) or Synchronous Digital Hierarchy (SDH) container.

In some embodiments, the device is further configured to: forward, at the first port and based on the usage status of the first port being determined as active, a packet from or to the customer equipment, and enable Media Access Control (MAC) address learning; or discard a packet at the first port based on the usage status of the first port being determined as standby.

In some embodiments, a port of the customer equipment is coupled to the first port and the second port via an optical splitter/combiner, and the device is further configured to: turn off a transmit laser at the first port based on the usage status of the first port being determined as standby; or turn on the transmit laser at the first port based on the usage status of the first port being determined as active.

In some embodiments, the device is further configured to: refresh, based on a change of the usage status of the first port, an MAC address learned on the first port and at least one mate port of the first transport node that is connected to the second transport node.

In some embodiments, the device is further configured to detect: a traffic data link failure; a transport node failure; or a Mate Fail between transport nodes.

In some embodiments, detection of the traffic data link failure is based on at least one of the following: physical layer failure detection; Operation, Administration and Management (OAM) link monitoring and remote failure indication; or Configuration Connection Failure Management (CFM) OAM Loss of Continuity (LOC) and remote defect indication.

In some embodiments, the device may, in a case that a failed transport node among the first transport node or the second transport node is recovered, disable a transmit laser at a port of the failed transport node until a usage status of the port is determined.

In some embodiments, the first transport node and the second transport node are included in a same network device, or in different network devices.

In some embodiments, the port function of the first port is a working port, a previous usage status of the first port is active, and the device is further configured to: change, based on detecting a link failure between the first port and the customer equipment, a protection state of the first port to indicate a working node failure; change the usage status of the first port as standby; flush an MAC address on the first port and a mate port of the second transport node; and send, to the second transport node, a control message indicating the working node failure.

In some embodiments, the port function of the first port is a protection port, a previous usage status of the first port is standby, and the device is further configured to: change, based on receiving from the second transport node a control message indicating a working node failure, a protection state of the first port to active; and flush an MAC address on the first port and a mate port of the second transport node.

In some embodiments, the port function of the first port is a working port, a previous usage status of the first port is active, and the device is further configured to: send, based on detecting a failure of the first transport node, at least one control message indicating a working node failure to the second transport node.

In some embodiments, the port function of the first port is a protection port, a previous usage status of the first port is active, and the device is further configured to: change, based on receiving from the second transport node at least on control message indicating a working node failure, both the usage status of the first port and a usage status of a third port coupled to a further customer equipment to active, wherein traffic data are transmitted between the further customer equipment and the customer equipment; and flush an MAC address on the first port and the third port.

In some embodiments, the port function of the first port is a protection port, the usage status of the first port is standby, and the device is further configure to: send, based on a detecting a protection node failure of the first transport node, at least one control message indicating a protection node failure to the second transport node.

In some embodiments, the port function of the first port is a working port, the usage status of the first port is active and the device is further configured to: maintain, based on receiving at least one control message indicating a protection node failure from the second transport node, the usage status of the first port active.

In some embodiments, the customer equipment comprises two ports for respectively transmitting different traffic data to the first port and the device is configured to: maintain, based on a determination that the usage status of the first port is standby, a transmit laser of the first port ON or OFF, or determine, based on detecting Mate Fail between the first transport node and the second transport node, the usage status of the first port and a usage status of the second port as active.

In some embodiments, the device further includes means for performing other steps in some embodiments of the method 1300. In some embodiments, the means include at least one processor, and at least one memory having computer program code stored thereon. The at least one memory and the computer program code are configured, together with the at least one processor, to cause the device to perform the steps.

In some example embodiments, the device that may perform the method 1300 may include means for performing respective steps of the method 1300. The means may be implemented in any appropriate form. For example, the means can be implemented in circuitry or software modules.

The device may include means for determining, at a first transport node, a protection state of a first port of the first transport node, based on at least one of at least one local request generated by the first transport node or at least one control message from a second transport node, where the first port and a second port of the second transport node are coupled to a customer equipment, a port function of the first port is one of a working port or a protection port, and a port function of the second port is the other of the working port or the protection port. The device may further include means for determining, based on the protection state and the port function of the first port, a usage status of the first port with respect to the customer equipment, where the usage status includes active or standby.

In some embodiments, each of the at least one local request indicates a protection state among a set of protection states, and a control message of the at least one control message includes a far-end request indicating a protection state of the second port among the set of protection states, where the set of protection states have respective associated priorities. The means for determining the protection state of the first port may include: sub-means for determining, from the at least one local request and the far-end request, a request with a highest priority; and sub-means for determining the protection state of the first port based on a previous protection state of the first port and the request with the highest priority.

In some embodiments, the set of protection states comprises at least one of the following: Lockout on Working; Lockout on Protection; Mate Fail; Forced Switch on Working; Forced Switch on Protection; Signal Fail on Working; Signal Fail on Protection; Signal Degrade on Working; Signal Degrade on Protection; Manual Switch on Working; Manual Switch on Protection; No Request on Working; or No Request on Protection.

In some embodiments, the priorities of the set of protection states at least meet one of the following: priorities of the Lockout on Working and the Lockout on Protection are higher than a priority of the Mate Fail, and the priority of the Mate Fail is higher than priorities of the Forced Switch on Working and the Forced Switch on Protection; or the priorities of the Lockout on Working and the Lockout on Protection are higher than the priorities of the Forced Switch on Working and the Forced Switch on Protection, and the priorities of the Forced Switch on Working and the Forced Switch on Protection are higher than the priority of the Mate Fail.

In some embodiments, the means for determining the request with the highest priority may include: sub-means for determining, based on the priorities, a local request with a highest priority among the at least one local request; and sub-means for determining the request with the highest priority among the determined local request and the far-end request.

In some embodiments, the means for determining the protection state of the first port comprises: in a case that the local request and the far-end request have a same priority, determining, based on the port function of the first port being the working port, that the usage status of the first port is the active; or determining, based on the function of the first port being the protection port, that the usage status of the first port is standby.

In some embodiments, the device may further comprise means for sending, based on the protection state of the first port, a control message to the second transport node, such that a usage status of the second port is determined at least based on the control message.

In some embodiments, the first transport node and the second transport node are coupled via at least one mate link, and the control message is transmitted over one of the at least one mate link.

In some embodiments, the device may further comprise means for, in a case that the request with the highest priority indicates the at least one mate link fails, determining the usage status of the first port and the usage status of the second port based on the indication of the control message.

In some embodiments, means for determining the usage status of the first port and the usage status of the second port may comprise at least one of the following: sub-means for maintaining the usage status of the first port and the usage status of the second port unchanged; or sub-means for determining the usage status of the first port and the usage status of the second port are both active.

In some embodiments, the at least one mate link comprises a plurality of mate links, and the control message and a copy thereof are transmitted respectively over a first link and a second link in the plurality of mate links.

In some embodiments, the control message indicates at least one of the following: a protection state of a port; a usage status of a port; or Filter Database (FDB) flush.

In some embodiments, the control message is transmitted via at least one of the following: an Ethernet header; an Internet Protocol (IP) header; a Multiprotocol Label Switching (MPLS) header; or an Optical Transport Network (OTN) or Synchronous Digital Hierarchy (SDH) container.

In some embodiments, the device may further comprise: means for forwarding, at the first port and based on the usage status of the first port being determined as active, a packet from or to the customer equipment, and enabling Media Access Control (MAC) address learning; or means for discarding a packet at the first port based on the usage status of the first port being determined as standby.

In some embodiments, a port of the customer equipment is coupled to the first port and the second port via an optical splitter/combiner, and the device may further comprise: means for turning off a transmit laser at the first port based on the usage status of the first port being determined as standby; or means for turning on the transmit laser at the first port based on the usage status of the first port being determined as active.

In some embodiments, the device may further comprise: means for refreshing, based on a change of the usage status of the first port, an MAC address learned on the first port and at least one mate port of the first transport node that is connected to the second transport node.

In some embodiments, the device is further configured to detect: a traffic data link failure; a transport node failure; or a Mate Fail between transport nodes.

In some embodiments, detection of the traffic data link failure is based on at least one of the following: physical layer failure detection; Operation, Administration and Management (OAM) link monitoring and remote failure indication; or Configuration Connection Failure Management (CFM) OAM Loss of Continuity (LOC) and remote defect indication.

In some embodiments, the device is further configured to: in a case that a failed transport node among the first transport node or the second transport node is recovered, disable a transmit laser at a port of the failed transport node until a usage status of the port is determined.

In some embodiments, the first transport node and the second transport node may be included in a same network device, or in different network devices.

In some embodiments, the port function of the first port is a working port, a previous usage status of the first port is active and the device may further comprise: means for changing, based on detecting a link failure between the first port and the customer equipment, a protection state of the first port to indicate a working node failure; means for changing the usage status of the first port as standby; means for flushing an MAC address on the first port and a mate port of the second transport node; and means for sending, to the second transport node, a control message indicating the working node failure.

In some embodiments, the port function of the first port is a protection port, a previous usage status of the first port is standby, and the device is further configured to: change, based on receiving from the second transport node a control message indicating a working node failure, a protection state of the first port to active; and flush an MAC address on the first port and a mate port of the second transport node.

In some embodiments, the port function of the first port is a working port, a previous usage status of the first port is active, and the device may further comprise: means for sending, based on detecting a failure of the first transport node, at least one control message indicating a working node failure to the second transport node.

In some embodiments, the port function of the first port is a protection port, a previous usage status of the first port is active, and the device is further configured to: change, based on receiving from the second transport node at least on control message indicating a working node failure, both the usage status of the first port and a usage status of a third port coupled to a further customer equipment to active, where traffic data are transmitted between the further customer equipment and the customer equipment; and flush an MAC address on the first port and the third port.

In some embodiments, the port function of the first port is a protection port, the usage status of the first port is standby, and the device is further configure to: send, based on a detecting a protection node failure of the first transport node, at least one control message indicating a protection node failure to the second transport node.

In some embodiments, the port function of the first port is a working port, the usage status of the first port is active and the device may further include: means for maintaining, based on receiving at least one control message indicating a protection node failure from the second transport node, the usage status of the first port active.

In some embodiments, the customer equipment comprises two ports for respectively transmitting different traffic data to the first port and the device is configured to: maintain, based on a determination that the usage status of the first port is standby, a transmit laser of the first port ON or OFF, or determine, based on detecting Mate Fail between the first transport node and the second transport node, the usage status of the first port and a usage status of the second port as active.

In some embodiments, the device may further include means for performing other steps in some embodiments of the method 1300. In some embodiments, the means include at least one processor, and at least one memory having computer program code stored thereon. The at least one memory and the computer program code are configured, together with the at least one processor, to cause the device to perform the steps.

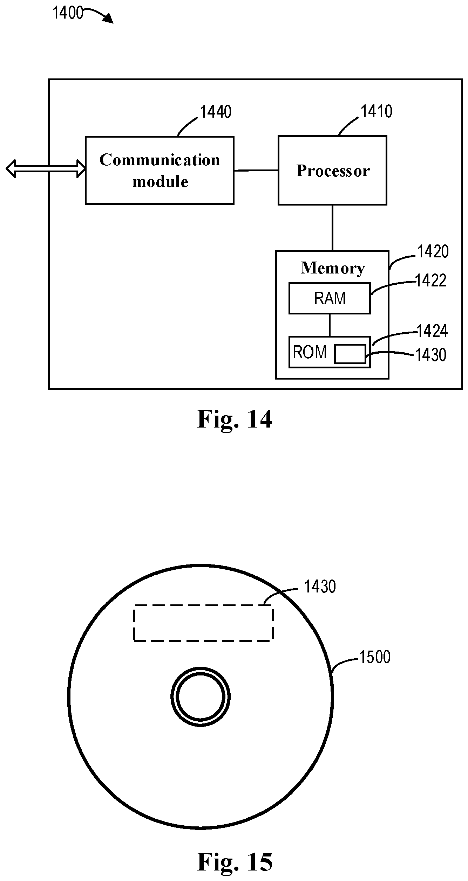

Fig. 14 illustrates a simplified block diagram of an electronic device 1400 adapted to implement the embodiments of the present disclosure. A device 1400 can be provided to implement the communication device, for example, one or both of the first transport node 110 and the second transport node 120 in Fig. 1. As shown therein, the device 1400 may include one or more processors 1410, one or more memories 1420 coupled to the processor(s) 1410, and one or more communication modules 1440 coupled to the processor(s) 1410.

The communication module 1440 is for bidirectional communication. For example, the communication module 1440 may include a transmitter, receiver, or transceiver applicable to embodiments of the present disclosure. The communication interface may be any interface required for communication with other network elements.

The processor 1410 may be of any type suitable to a local technical network, and may include, but is not limited to, one or more of general purpose computers, special purpose computers, microcontrollers, Digital Signal Processors (DSPs), and processors having controller-based multi-core controller architecture. The device 1400 may include a plurality of processors, for example, an application specific integrated circuit chip that is slaved in time to a clock that is synchronized with the main processor.

The memory 1420 may include one or more non-volatile memories and one or more volatile memories. Examples of the non-volatile memories include, but are not limited to, a Read-Only Memory (ROM) 1424, an Electrically Programmable Read-Only Memory (EPROM), a flash memory, a hard disk, a Compact Disc (CD), a Digital Video Disk (DVD), and other magnetic storage and/or optical storage. Examples of the volatile memories include, but are not limited to, a Random Access Memory (RAM) 1422 and other volatile memories that will not last in the power-down duration.

A computer program 1430 includes computer executable instructions that are executed by the associated processor 1410. The program 1430 may be stored in the ROM 1424. The processor 1410 may perform any suitable actions and processing by loading the program 1430 into the RAM 1422.

The embodiments of the present disclosure may be implemented by means of the program 1430 so that the device 1400 may perform any process of the disclosure as discussed with reference to Figs 2-13. The embodiments of the present disclosure may also be implemented by hardware or by a combination of software and hardware.

In some embodiments, the program 1430 may be tangibly contained in a computer readable medium which may be included in the device 1400 (such as in the memory 1420) or other storage devices that are accessible by the device 1400. The device 1400 may load the program 1430 from the computer readable medium to the RAM 1422 for execution. The computer readable medium may include any types of tangible non-volatile storage, such as ROM, EPROM, a flash memory, a hard disk, CD, DVD, and the like.

Fig. 6 shows an example of the computer readable medium 1500 in the form of CD or DVD. The computer readable medium has the program 1430 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 1300 as described above with reference to Fig. 13. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a Random Access Memory (RAM), a Read-Only Memory (ROM), an Erasable Programmable Read-Only Memory (EPROM or Flash memory), an optical fiber, a portable Compact Disc Read-Only Memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results.

In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

## Claims

1. A device comprising:
at least one processor; and
at least one memory having instructions stored thereon, the instructions, when executed by the at least one processor, causing the device to:
determine (201), at a first transport node (110), a protection state of a first port of the first transport node (110), based on at least one of at least one local request generated by the first transport node (110) or at least one control message from a second transport node (120), wherein the first port and a second port of the second transport node (120) are coupled to a customer equipment, a port function of the first port is one of a working port or a protection port, and a port function of the second port is the other of the working port or the protection port; and
determine (202), based on the protection state and the port function of the first port, a usage status of the first port with respect to the customer equipment, wherein the usage status includes active or standby.

2. The device of claim 1, wherein each of the at least one local request indicates a protection state, among a set of protection states that have respective associated priorities, and a control message of the at least one control message includes a far-end request indicating a protection state of the second port among the set of protection states, and wherein the device is caused to determine the protection state of the first port by:
determining, from the at least one local request and the far-end request, a request with a highest priority; and
determining the protection state of the first port based on a previous protection state of the first port and the request with the highest priority,
wherein for example the set of protection states comprises at least one of the following: Lockout on Working; Lockout on Protection; Mate Fail; Forced Switch on Working; Forced Switch on Protection; Signal Fail on Working; Signal Fail on Protection; Signal Degrade on Working; Signal Degrade on Protection; Manual Switch on Working; Manual Switch on Protection; No Request on Working; or No Request on Protection,
wherein for example the priorities of the set of protection states at least meet one of the following:
priorities of the Lockout on Working and the Lockout on Protection are higher than a priority of the Mate Fail, and the priority of the Mate Fail is higher than priorities of the Forced Switch on Working and the Forced Switch on Protection; or
the priorities of the Lockout on Working and the Lockout on Protection are higher than the priorities of the Forced Switch on Working and the Forced Switch on Protection, and the priorities of the Forced Switch on Working and the Forced Switch on Protection are higher than the priority of the Mate Fail.

3. The device of claim 2, wherein the device is caused to determine the request with the highest priority by:
determining, based on the priorities, a local request with a highest priority among the at least one local request; and
determining the request with the highest priority among the determined local request and the far-end request,
wherein for example determining the protection state of the first port comprises: in a case that the local request and the far-end request have a same priority,
determining, based on the port function of the first port being the working port, that the usage status of the first port is the active; or
determining, based on the function of the first port being the protection port, that the usage status of the first port is standby.

4. The device of any of claims 1-3, wherein the instructions, when executed by the at least one processor, further cause the apparatus to:
send (203), based on the protection state of the first port, a control message (205) to the second transport node (120), such that a usage status of the second port is determined at least based on the control message (205),
wherein for example the first transport node (110) and the second transport node (120) are coupled via at least one mate link, and the control message is transmitted over one of the at least one mate link,
wherein for example the instructions, when executed by the at least one processor, further cause the device to:
in a case that the request with the highest priority indicates the at least one mate link fails, determine the usage status of the first port and the usage status of the second port based on the indication of the control message,
wherein for example determining the usage status of the first port and the usage status of the second port comprises at least one of the following:
maintaining the usage status of the first port and the usage status of the second port unchanged; or
determining the usage status of the first port and the usage status of the second port are both active.

5. The device of claim 4, wherein the at least one mate link comprises a plurality of mate links, and the control message and a copy thereof are transmitted respectively over a first link and a second link in the plurality of mate links.

6. The device of any of claims 1-5, wherein A) the control message indicates at least one of the following:
a protection state of a port;
a usage status of a port; or
Filter Database, FDB, flush
and/or wherein B) the control message is transmitted via at least one of the following:
an Ethernet header;
an Internet Protocol, IP, header;
a Multiprotocol Label Switching, MPLS, header; or
an Optical Transport Network, OTN, or Synchronous Digital Hierarchy, SDH, container
and/or wherein C) the instructions, when executed by the at least one processor, further cause the device to:
forward, at the first port and based on the usage status of the first port being determined as active, a packet from or to the customer equipment, and enable Media Access Control, MAC, address learning; or
discard a packet at the first port based on the usage status of the first port being determined as standby,
and/or wherein D) a port of the customer equipment is coupled to the first port and the second port via an optical splitter/combiner, and the instructions, when executed by the at least one processor, cause the device to:
turn off a transmit laser at the first port based on the usage status of the first port being determined as standby; or
turn on the transmit laser at the first port based on the usage status of the first port being determined as active.

7. The device of any of claims 1-6, wherein the instructions, when executed by the at least one processor, cause the apparatus to:
refresh, based on a change of the usage status of the first port, an MAC address learned on the first port and at least one mate port of the first transport node (110) that is connected to the second transport node (120).

8. The device of any of claims 1-7, wherein the instructions, when executed by the at least one processor, cause the device to detect:
a traffic data link failure;
a transport node failure; or
a Mate Fail between transport nodes,
wherein for example detection of the traffic data link failure is based on at least one of the following:
physical layer failure detection;
Operation, Administration and Management, OAM, link monitoring and remote failure indication; or
Configuration Connection Failure Management, CFM, OAM Loss of Continuity, LOC, and remote defect indication,
wherein for example the instructions, when executed by the at least one processor, further cause the device to:
in a case that a failed transport node among the first transport node (110) or the second transport node (120) is recovered, disable a transmit laser at a port of the failed transport node until a usage status of the port is determined.

9. The device of any of claims 1-8, wherein the first transport node (110) and the second transport node (120) are included in a same network device, or in different network devices.

10. The device of any of claims 1-9, wherein the port function of the first port is a working port, a previous usage status of the first port is active and the instructions, when executed by the at least one processor, further cause the device to:
change, based on detecting a link failure between the first port and the customer equipment, a protection state of the first port to indicate a working node failure;
change the usage status of the first port as standby;
flush an MAC address on the first port and a mate port of the second transport node (120); and
send, to the second transport node (120), a control message indicating the working node failure.

11. The device of any of claims 1-10, wherein the port function of the first port is a protection port, a previous usage status of the first port is standby, and the instructions, when executed by the at least one processor, further cause the device to:
change, based on receiving from the second transport node (120) a control message indicating a working node failure, a protection state of the first port to active; and
flush an MAC address on the first port and a mate port of the second transport node (120).

12. The device of any of claims 1-11, wherein the port function of the first port is a working port, a previous usage status of the first port is active, and the instructions, when executed by the at least one processor, further cause the device to:
send, based on detecting a failure of the first transport node (110), at least one control message indicating a working node failure to the second transport node (120).

13. The device of any of claims 1-12, wherein A) the port function of the first port is a protection port, a previous usage status of the first port is active, and the instructions, when executed by the at least one processor, further cause the device to:
change, based on receiving from the second transport node (120) at least on control message indicating a working node failure, both the usage status of the first port and a usage status of a third port coupled to a further customer equipment to active, wherein traffic data are transmitted between the further customer equipment and the customer equipment; and
flush an MAC address on the first port and the third port, and/or
wherein B) the port function of the first port is a protection port, the usage status of the first port is standby, and the instructions, when executed by the at least one processor, further cause the device to:
send, based on a detecting a protection node failure of the first transport node (110), at least one control message indicating a protection node failure to the second transport node (120),
and/or wherein C) the port function of the first port is a working port, the usage status of the first port is active and the instructions, when executed by the at least one processor, further cause the device to:
maintain, based on receiving at least one control message indicating a protection node failure from the second transport node (120), the usage status of the first port active.

14. The device of any of claims 1-13, wherein the customer equipment comprises two ports for respectively transmitting different traffic data to the first port and the second port, and the instructions, when executed by the at least one processor, further cause the device to:
maintain, based on a determination that the usage status of the first port is standby, a transmit laser of the first port ON or OFF, or
determine, based on detecting Mate Fail between the first transport node (110) and the second transport node (120), the usage status of the first port and a usage status of the second port as active.

15. A method, comprising:
determining (201), at a first transport node (110), a protection state of a first port of the first transport node (110), based on at least one of at least one local request generated by the first transport node (110) or at least one control message from a second transport node (120), wherein the first port and a second port of the second transport node (120) are coupled to a customer equipment, a port function of the first port is one of a working port or a protection port, and a port function of the second port is the other of the working port or the protection port; and
determining (202), based on the protection state and the port function of the first port, a usage status of the first port with respect to the customer equipment, wherein the usage status includes active or standby.

16. A device, comprising:
means for determining (201), at a first transport node (110), a protection state of a first port of the first transport node (110), based on at least one of at least one local request generated by the first transport node (110) or at least one control message from a second transport node (120), wherein the first port and a second port of the second transport node (120) are coupled to a customer equipment, a port function of the first port is one of a working port or a protection port, and a port function of the second port is the other of the working port or the protection port;
and means for determining (202), based on the protection state and the port function of the first port, a usage status of the first port with respect to the customer equipment, wherein the usage status includes active or standby.

17. A computer readable medium (1500) having instructions (1430) stored thereon, wherein the instructions (1430), when executed by a device, cause a device to at least:
determine (1310), at a first transport node (110), a protection state of a first port of the first transport node (110), based on at least one of at least one local request generated by the first transport node (110) or at least one control message from a second transport node (120), wherein the first port and a second port of the second transport node (120) are coupled to a customer equipment, a port function of the first port is one of a working port or a protection port, and a port function of the second port is the other of the working port or the protection port; and
determine (1320), based on the protection state and the port function of the first port, a usage status of the first port with respect to the customer equipment, wherein the usage status includes active or standby.
